# EUROPEAN PATENT APPLICATION

(11) **EP 1 527 723 A1**
(43) Date of publication of application: **04.05.2005**
(21) Application number: 03778228.1
(22) Date of filing: 17.12.2003
(51) Int. Cl.: A47J 37/08

(54) **THE BREAD MAKER WHICH CAN COOK RICE**

(30) Priority: 10.08.2003 CN 03273306
(71) Applicant: Guo, Jiangang, Foshan, Guangdong 528322 (CN)
(72) Inventor: Guo, Jiangang, Foshan, Guangdong 528322 (CN)
(74) Representative: Evens, Paul Jonathan
(86) International application number: PCT/CN2003/001081
(87) International publication number: WO 2005/013777

(57) **Abstract**

This application discloses a bread maker incorporated with a function for cooking rice, in which a cooking means is further incorporated within a conventional bread maker. The cooking means can comprise a heating plate and an inner pan and then is disposed within the baking chamber of the bread maker. The cooking means can also comprise a heating plate, an inner pan and an outer pan and then is disposed in essential juxtaposition with the baking chamber.

## Description

### FIELD OF THE INVENTION

This invention relates to a bread maker, and more specifically, this invention relates to a bread maker incorporated with a function for cooking rice, etc.

### BACKGROUND OF THE INVENTION

In the market there are various types of automatic bread makers which are capable of performing the entire bread making process, including mixing and kneading, fermentation, baking and heat preservation. And there are also various types of electric cookers for cooking rice in the market. However, there is not yet a household appliance which has both the bread making function and the rice cooking function.

### SUMMARY OF THE INVENTION

It is therefore an object of the present invention to provide a household electric appliance which can simultaneously be used to make bread and cook rice, namely, a bread maker incorporated with a function for cooking rice.

In accordance with the present invention, a bread maker with a function for cooking rice comprises of a casing, an baking chamber, a bread vessel, an electric heater, a thermistor sensor, an exhaust outlet, a stirring blade, a transmission system (or gearing), a control motor, a computer controller as well as the cooking means for cooking rice.

There are two embodiments to realize the above object of the present invention. For the first embodiment, the cooking means for cooking rice, which is installed in the baking chamber of the bread maker, comprises a heating plate and an inner pan. If the bread maker is used for baking bread then the bread vessel is employed and placed within the baking chamber. If the bread maker is used for cooking rice then the inner pan is employed and placed within the baking chamber.

For the second embodiment, the cooking means for cooking rice, which is installed in a juxtaposition with the baking chamber, comprises a heating plate, an inner pan and an outer pan. In accordance with this embodiment, there are two sets of means installed in a juxtaposition in the casing of a conventional bread maker, namely the baking means for making bread and the cooking means for cooking rice.

A temperature sensor is provided on the bottom of the inner pan of the cooking means for cooking rice, enabling the controller to automatically control the cooking process. In accordance with the first embodiment, since the bread vessel and the inner pan can be placed in the same position, the temperature sensor is preferably disposed along the bottom rim of the inner pan. In the second embodiment, the temperature sensor is preferably disposed at the center of the bottom of the inner pan.

It is therefore provided in accordance with the present invention, a bread maker incorporated with a function for cooking rice, which is simple in structure, compact in space, highly automatic and easy to operate.

The above and other objects and features of the invention will become apparent by reference to the following description of my invention and the drawings.

### BRIEF DESCRIPTION OF THE DRAWINGS

Fig. 1 shows the structure of the bread maker when it is used for baking bread in accordance with the first embodiment of the present invention;
Fig. 2 shows the structure of the bread maker when it is used for cooking rice in accordance with the first embodiment of the present invention;
Fig. 3 shows the structure of the bread maker in accordance with the second embodiments of the present invention;
Fig. 4 is a top view of the bread maker in accordance with the second embodiment of the present invention.

### DETAILED DESCRIPTION OF THE INVENTION

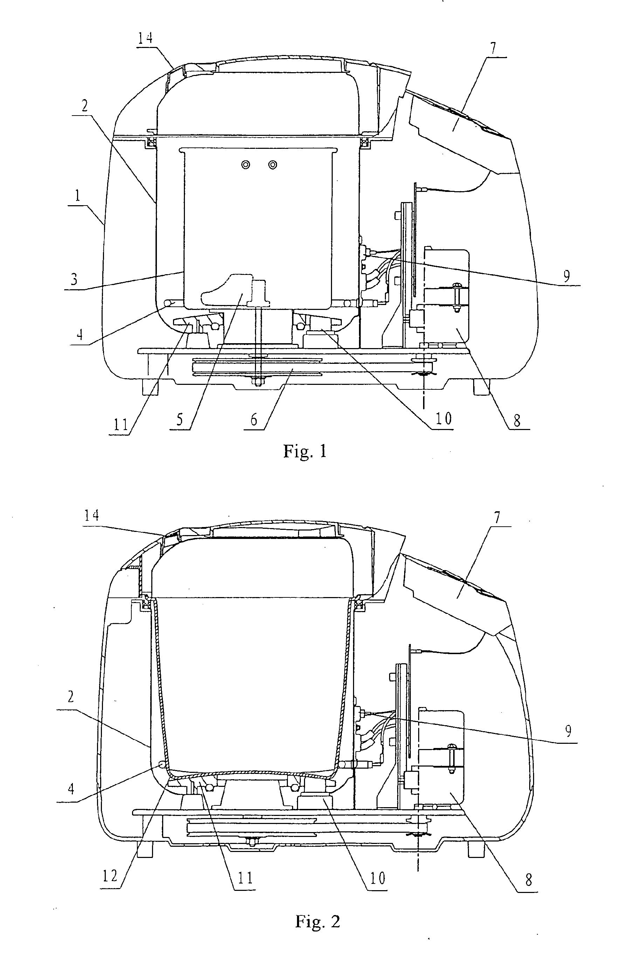

Reference is now made to Fig. 1 and Fig. 2, which are illustrations of the first embodiment of the present invention. As can been seen from Fig. 1 and Fig. 2, the bread maker in accordance with the first embodiment of the present invention comprises: a casing 1 which can be essentially same as that of a conventional bread maker, a baking chamber 2, a bread vessel 3, an electric heater 4, a stirring blade 5, a control motor 8, a transmission system 6, a thermistor sensor 9, an exhaust outlet 14 and a micro-computer controller 7. The bread vessel 3 is disposed within the baking chamber 2. The thermistor sensor 9 is arranged on the inner wall of the baking chamber 2. The electric heater 4 is provided at a lower portion of the inner wall of the baking chamber 2 and is arranged around the bread vessel 3. The stirring blade 5, which is connected to the control motor 8 by the transmission system 6, is disposed within the bread vessel 3. The control motor 8 controls the stirring blade 5 to rotate with respect to its rotation axis, so as to knead the dough. The microcomputer controller 7 controls the bread maker to automatically perform kneading, fermentation and baking. When the bread maker is used for baking bread, the steam is discharged from the exhaust outlet 14 disposed atop of the casing 1. In accordance with this embodiment, a heating plate 11 and an inner pan 12 is further arranged within the baking chamber 2.

As shown in Fig. 1, when the bread vessel 3 is disposed within the baking chamber 2, the bread maker can be used for baking bread and the heating plate 11 is not connected to power supply. Under the control of the micro-computer controller 7, the bread maker can bake bread automatically.

As shown in Fig. 2, when the inner pan 12, instead of the bread vessel 3, is disposed within the baking chamber 2 the inner pan 12 is in good contact with an upper surface of the heating plate 11 and the temperature sensor 10.

After the bread maker is powered on, the electric heater 4 and the heating plate 11 will properly generate heat according to the predetermined program of the microcomputer controller 7 and the rice cooking will be automatically finished.

Therefore, if the user wants to bake bread then the bread vessel 3 can be disposed within the baking chamber 2. The microcomputer controller 7 will automatically control the process of kneading, fermentation and baking. If the user wants to cook rice then the inner pan 12 can be disposed within the baking chamber 2. The microcomputer controller 7 will automatically control the process of cooking rice.

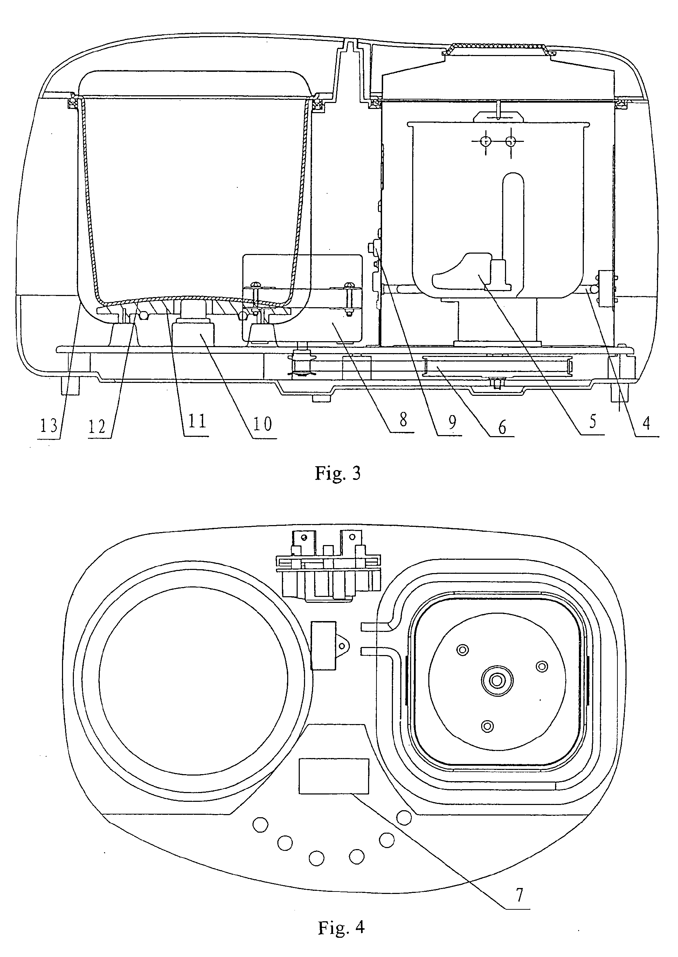

As can been seen from Fig. 3 and Fig. 4, in accordance with the second embodiment of the present invention, the cooking means is disposed in essential juxtaposition with the baking chamber 2. Compared with a conventional bread maker, the bread maker in accordance with this embodiment includes an enlarged casing, so as to accommodate two sets of means: the baking means and the cooking means. Inside the casing 1 an outer pan 13 is further provided, in which the heating plate 11 and inner pan 12 are disposed. The bottom surface of the inner pan 12 has essentially same configuration with the upper surface of the heating plate 11, thereby optimizing heat exchange. The temperature sensor 10 is arranged at the center of the bottom of the inner pan 12. In accordance with this embodiment the baking means is disposed in essential juxtaposition with the cooking means, thus the replacement of the bread vessel 3 or the inner pan 12 can be avoided. In addition, the process of baking and cooking can be automatically and simultaneously effected under the control of the microcomputer controller 7.

Although the present invention has been disclosed and described with reference to the embodiments thereof, it is apparent that other variations and modifications may be made, and it is intended that the following claims cover said variations and modifications within the true spirit and scope of the invention.

## Claims

1. A bread maker incorporated with a function for cooking rice, etc comprising a casing (1), a baking chamber (2), a bread vessel (3), a electric heater (4), a exhaust outlet (14), a thermistor sensor (9), a stirring blade (5), a transmission system (6), a control motor (8) and a micro-computer controller (7), wherein a cooking means is further incorporated within said bread maker.

2. The bread maker according to claim 1, wherein the cooking means is disposed within the baking chamber (2) of said bread maker and said cooking means comprises a heating plate (11) and an inner pan (12).

3. The bread maker according to claim 1, wherein the cooking means is disposed in essential juxtaposition with the baking chamber (2) and said cooking means comprises a heating plate (11), an inner pan (12) and an outer pan (13).

4. The bread maker according to claim 2 or claim 3, wherein a temperature sensor (10) is provided at the bottom of the inner pan (12).

5. The bread maker according to claim 2, wherein a temperature sensor (10) is arranged along the bottom rim of the inner pan (12).

6. The bread maker according to claim 3, wherein a temperature sensor (10) is arranged at the center of the bottom of the inner pan (12).
